Europäisches Patentamt

European Patent Office

Office européen des brevets

(19)

(11) Publication number:

**0 106 678**
**A2**

(12)

# EUROPEAN PATENT APPLICATION

(21) Application number: **83306211.0**

(22) Date of filing: **13.10.83**

(51) Int. Cl.³: **B 60 C 23/04**

(30) Priority: **18.10.82 US 435088**

(43) Date of publication of application:
**25.04.84 Bulletin 84/17**

(84) Designated Contracting States:
**DE FR GB SE**

(71) Applicant: **ROCKCOR INC.**
**11441 Willows Road**
**Redmond Washington 98052(US)**

(72) Inventor: **Hanson, Douglas C.**
**14304 - 84th Avenue NE**
**Bothell WA 98011(US)**

(72) Inventor: **Larson, Douglas A.**
**706 South Maple**
**Oak Park IL 60304(US)**

(74) Representative: **Blatchford, William Charles et al,**
**WITHERS & ROGERS 4 Dyers Buildings Holborn**
**London, EC1N 2JT(GB)**

(54) **Pressure activated low inflation indicator.**

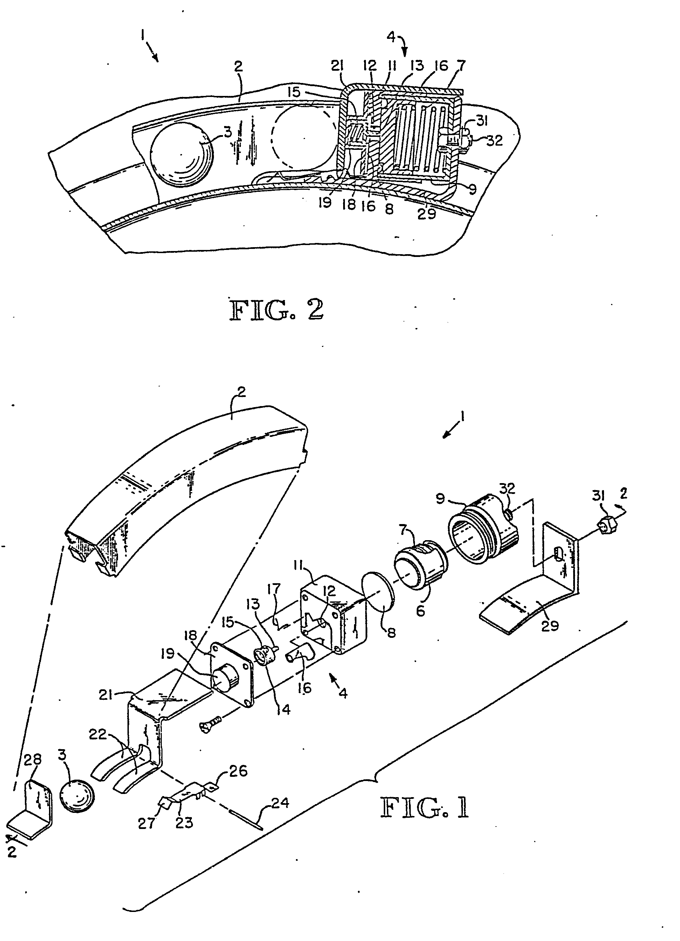

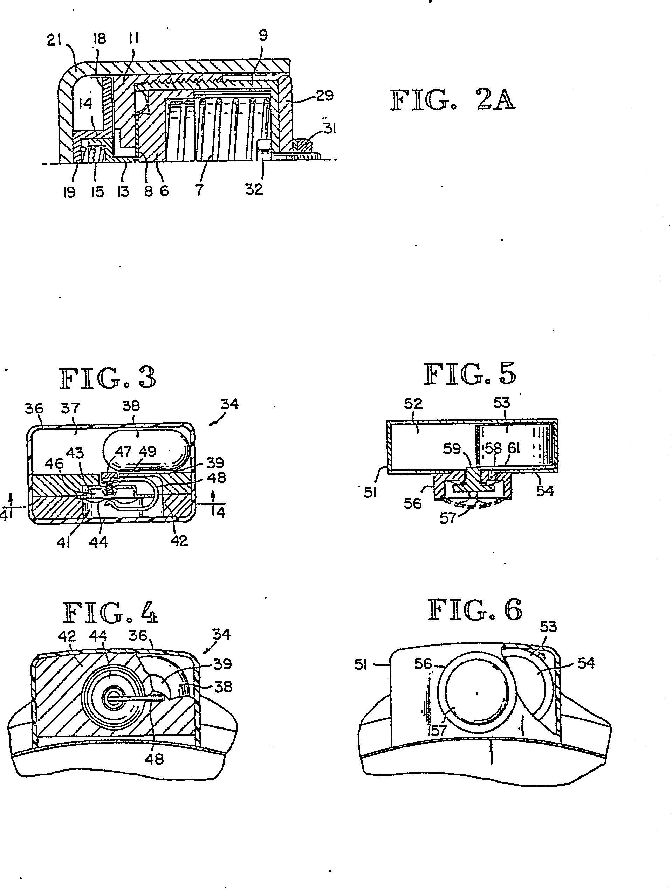

(57) A device (Figure 2) for signalling the under-inflation of a tyre to the driver of a vehicle includes a striker ball (3), and a pressure-activated latch (4) which restrains the ball (3) from movement while tyre pressure is above a given limit value. When tyre pressure drops below the limit value, the latch (4) releases the striker ball (3), which is then free to roll or move in a channel (2) mounted on the wheel rim, and strike against a wall of the channel (2) as the wheel rotates. This produces an acoustic signal for the vehicle driver to hear.

FIG. 2

EP 0 106 678 A2

## PRESSURE ACTIVATED LOW INFLATION INDICATOR

The invention is a device for signaling to a vehicle driver an under-inflated condition of a tire.

Under-inflation of tires on passenger cars, trucks and other vehicles causes poor fuel economy by increasing rolling resistance, shortened tire life by increasing heat build-up, and a greater chance of accidents by decreasing the handling capabilities of the vehicle. This leads to unnecessary loss of life, and injury to persons and property.

While tires today are manufactured for dependability and durability, leakage of air through and around the valve stem and bead seat is unavoidable. Because of the current trend toward self-service gas stations, a vehicle owner often must check and maintain proper tire inflation himself, or take the risks associated with underinflation. Because many drivers lack either the knowledge, time or motivation to check and maintain proper tire pressure, a device is needed which will inform a driver of a low pressure condition in a tire without his making a conscious effort to detect the condition. Ideally, such a device would offer the driver motivation to correct the condition without being a source of irritation or distraction. To achieve the greatest possible fuel economy, such a device should be sensitive to a small pressure drop of about 5 psig. Finally, the device should be easily installed on wheels already in use, and should not interfere with tire mounting or weaken the structure of the tire. Since the underinflation of a tire on a single vehicle will compromise the safety of all surrounding persons and property, as well as contributing to fuel shortages felt by all, a cost low enough for the device to achieve widespread use is essential.

Prior art devices do not meet these standards. Active valve stem-indicators detect only gross changes in tire pressure and require an effort by a driver who must make a visual observation of a gauge. A driver can easily forget to check the gauge or ignore its indication of low pressure, in which case the device does not achieve its purpose.

Electronic low pressure indicators have been proposed but would be too costly for widespread use by the driving public.

Low pressure warning devices which detect deformation in a tire's side wall interfere with the integrity of a tire's structure, are not easily installed on tires already in use, and make tire mounting difficult.

Low pressure warning devices which signal continuously and persistently during a low inflation condition arguably will motivate a driver to correct the condition. However, such devices may be a sufficient source of annoyance to motivate a driver to disable the device, or avoid its installation on his vehicle. Thus, such a device may be unacceptable to the consumer and therefore unsuccessful.

The present invention includes a striker body, such as a ball or disc, and a pressure-activated latch which restrains the striker body from movement while tire pressure is above a predetermined limit. When tire pressure drops below the limit, the latch releases the striker body, which is then free to roll or move within a channel mounted on the wheel rim, and impact against a wall of the channel as the wheel rotates. This produces an acoustic impact signal for the vehicle driver to hear.

The present invention provides a low·pressure indicator capable of detecting a small drop in tire pressure. The invention is a passive device which will inform a driver of a low pressure condition without his making an independent effort. The device will motivate the driver to correct the condition, yet will not continually annoy or distract the driver. The invention accomplishes this by signaling to the driver at low speeds, which are typical at the beginning and end of a trip or during a short trip. In this way, the device provides a persistent reminder signal without becoming so constantly distracting or irritating during a long trip that a driver will be tempted to disable the device, or to avoid the installation and use of the device on his vehicle in the first place.

The present invention, since it does not contact the tire, will not damage the tire or interfere with sealant coatings which are coming into common use, and will remain purely pressure-responsive, since its operation is independent of tire deformation.

The invention is extremely compact and, when mounted at the drop center of a wheel rim, fits within the envelope defined by the drop center and the bead during tire mounting in the conventional method. For example, one embodiment of the invention has outside dimensions roughly equal to 2 and 1/8 inches length, one and 1/2 inch width, and one and 1/8 inch height, with the latch and striker encased in a housing and protected against debris and abuse. Because the device is self-contained, it can be easily installed by someone having no knowledge of its mechanism or special training.

Fig. 1 is an exploded view of the first embodiment of the invention;

Fig. 2 is a sectional view of the first embodiment taken along line 2-2 of Fig. 1, showing the latch in a low-pressure condition;

Fig. 2a is a sectional view showing detail of a portion of the structure in Fig. 2.

Fig. 3 is a partially sectioned elevational view of a second embodiment of the low pressure warning device of the present invention;

Fig. 4 is a sectional view of the second embodiment taken along line 4-4 of Fig. 3 with parts broken away to illustrate the position of the striker;

Fig. 5 is a partially sectioned elevational view of a third embodiment of the low pressure warning device of the present invention;

Fig. 6 is a side elevational view of the third embodiment with parts broken away to illustrate the position of the striker;

Fig. 7 is an elevational view of a fourth embodiment of the invention mounted on a wheel rim;

Fig. 8a is a sectional view of the fourth embodiment taken along line 8-8 of Fig. 7, showing

the latching mechanism;

Fig. 8b is a sectional view of the fourth embodiment taken along line 8-8 of Fig. 7, showing an alternative latching mechanism; and

Fig. 9 is a perspective view of the fourth embodiment mounted on a wheel rim.

Referring to Figs. 1, 2 and 2a, one embodiment of the low pressure indicating device 1 includes a track or channel 2 in which a striker body, such as a ball 3, can roll. In this embodiment, the channel 2 is preferably an elongated arcuately-shaped three-sided tube of sheet metal, with the fourth, or bottom, side of the channel being formed by the wheel rim upon which the device 1 is mounted. At one end of the channel 2 is a pressure-sensitive latch mechanism 4 which includes a cylindrical housing 9 threadedly engaged with a cap 11 and containing a hollow piston 6 having therein a preload spring 7 bearing against the circular end wall of the housing 9 and the interior end wall of the piston 6. An impermeable pressure-deformable diaphragm 8 is mounted inside the housing 9 between the piston 6 and cap 11 with its circumference sealed therebetween, forming a chamber of reference pressure in the housing 9. The thickness of the diaphragm 8 is exaggerated in the drawings for clarity. In reality, the diaphragm 8 is extremely thin, and has negligible stiffness, relative to the spring 7. It will be understood that the materials and construction of the diaphragm and reference pressure chamber in this and all other embodiments utilizing a diaphragm are chosen to give the desired amount of deformation at a predetermined threshold pressure level which is chosen with desired tire inflation as the criterion.

An arm 16 mounted to the outside of the cap 11 by a screw or other commonly known means pivots in the plane of the cap to a position where the arm abuts a cylindrical locking body 14 having a projection 13 which extends through an aperture 12 in the cap 11 to contact the center of the diaphragm 8. A hairpin spring 17 bearing on a lip on the cap 11 and a side of the arm 16 biases the arm 16 away from the locking body 14. A cover plate 18, having a cylindrical cavity 19 into which the locking body 14 fits, covers the assembly on top of the cap 11. A bias spring 15 within the locking body 14 presses against the end of the cavity 19 and the interior of the locking body 14 to bias the locking body 14 toward the diaphragm 8.

A protective top plate 21 covers the entire top of the latch mechanism 4, and extends down over the cover plate 18. Two parallel arms 22 on the downward extension of the top plate 21 extend outwardly from the latch mechanism. A ball latching spring 23 located between the arms 22 pivots on a fulcrum pin 24 inserted through and perpendicular to the arms 22. On the side of the pin 24 nearest the latch mechanism 4, the latching spring 23 has an extension 26 which extends under the coverplate 18 and beneath the arm 16. The opposite end of the latching spring 23 forms an upward projection 27 which is spaced from the pin 24 to such a degree that it will block movement of a ball 3 which normally lies against the top plate 21 on the arms 22.

The channel 2 is mounted over the arms 22 and extends outwardly from the latch mechanism 4. The
channel 2 may be attached by, for example, folding
tabs or the like on the end of the channel 2 around
the downward extension of the top plate 21 and spot
welding them thereto. A plate 28 may be similarly spot
welded to folded tabs at the opposite end of the
channel 2 and suitably attached to the rim so as
to contain the ball within the channel 2.

A mounting plate 29 on the side of the latch
mechanism 4 opposite the channel 2 extends underneath
the latch and is provided with an upright on which the
latch mechanism is mounted by a nut 31 engaged with a
threaded projection 32 on the end of diaphragm housing 9.
Although the device 1 may be welded to the wheel
rim as illustrated, it may also be attached by such
means as a metal rim band. It is also advisable to
attach a suitable counterweight to the opposite side
of the wheel rim for proper dynamic wheel balance.

In operation, when air pressure in the
inflated tire is above a predetermined threshold, the
pressure acting on the diaphragm 8 via the aperture 12
overcomes the preload force of spring 7, thus forcing
the piston 6 away from the cap 11. With the piston
in the retracted position, the latch locking body 14
is biased by the spring 15 against the cap 11, with
its projection 13 fully inserted through the aperture
12. The arm 16 is thus prevented from being pivoted
upwardly by the latch locking body 14. In this position the arm 16 prevents upward movement of the extension 26 of the ball latch spring 23, thus locking
the ball-retaining projection 27 in a position where it
blocks outward movement of the ball 3.

As shown in Fig. 2, as the tire pressure approaches the threshold value, the piston 6 will be forced toward the cap 11 by spring 7, as a result of a force imbalance on the diaphragm 8. The locking body 14 will be forced away from the face of cap 11 by the piston, allowing the arm 16 to be pivoted upwardly by the extension 26 on the ball latch spring 23. The weight of the ball 3 acting on the latching spring is sufficient to overcome the force of the hairpin spring 17, and will move the ball-retaining projection 27 downwardly as shown in Fig. 2. The ball is now free to roll or fall within the channel 2 under the influences of gravity and centrifugal force, and will impact against the plate 28 and downward extension of top plate 21 at the ends of the channel 2, creating an audible acoustic signal indicative of the low pressure condition.

If the low pressure condition in the tire is corrected, the diaphragm 8 will assume its original position, holding the piston 6 away from the interior of cap 11. Hairpin spring 17 will force the arm 16 downward, and bias spring 15 will again hold the locking body 14 in its original position blocking upward movement of the arm 16. When the ball 3 rolls toward the latch 4, it will roll over the projection 27 on the spring latch 23 because of its angular configuration and be retained thereby.

Figs. 3 and 4 illustrate a second embodiment of the invention. In this embodiment, the signaling device 34 includes a steel housing or cup 36 mounted to the wheel rim, which houses a latching mechanism 41 and provides a confined cavity or channel 37 concentric to the wheel's center of rotation in which a striker 38 can roll. A concentric relationship between the center of rotation of the wheel and the channel in this and all other embodiments has been found to have the highly desirable effect of broadening the speed range over which the device will signal a low pressure condition. The cup 36 is preferably no more than one and 1/4 inches in height, which results in a minimum of interference with the mounting of the tire on the wheel rim. The cup 36 also serves to protect the internal mechanism from debris.

The latching mechanism 41 is contained in a housing 42 bonded to the interior of the steel cup 36 by an adhesive or other well-known means, with one exterior side of the housing 42 forming a sidewall of the channel 37. The latching mechanism 41 includes a pressure sensor assembly utilizing a shallow metal spherical shell, commonly known as a snap-action disc, which will snap from one equilibrium state to another when subjected to pressure. This snap-through behavior of the snap-action disc is characterized by a sudden large change in deformation magnitude being caused by a small increase in load at a particular load, or pressure, level. The snap-action disc 44 is sealed to the periphery of a stamped metal cup 43, with the space between the cup 43 and the snap-action disc 44 forming a chamber 46 of reference pressure. The materials and construction of the snap-action disc 44 are chosen to provide deformation of the disc at the predetermined threshold pressure level.

The pressure sensor assembly is adhesively or otherwise mounted to the housing 42 with the direction of snap-action disc deformation perpendicular to the length of the channel 37.

The striker used in this embodiment is an approximately two-ounce steel body with a width approximately equal to the width of the channel 37. The striker 38 has a circular cross-section in the plane of rotation and a cylindrical step 39 on each side. When the tire is fully inflated, a lock pin 47 extends perpendicular to the channel 37 through an opening in the side of housing 42 into the path of the step 39 to block movement of the striker 38. A linkage 48 affixed to an end of the lock pin 47 within the housing 42 extends around the cup 43 to contact the center of the snap-action disc 44. The linkage 48 and lock pin 47, which are normally biased toward the locking position by a spring 49 acting between the lock pin 47 and cup 43, will move out of the channel 37 and into the housing 42 in response to outward deformation of the snap-action disc when pressure in the tire drops to a predetermined threshold level. The deforming movement of the snap-action disc 44 overcomes the force of the spring 49, and moves the lock pin 47 out of the path of the striker 38, which is then free to roll and impact against the walls of the channel 37. When tire pressure rises above the predetermined level, the snap-action disc 44 returns to its original configuration, shown in Fig. 3, and the spring 49 forces the lock pin 47 back into the path of the striker 38. Use of a snap-action disc as the pressure sensing element is advantageous in that it prevents hairline engagement between the lock pin 47 and striker 38, since the snap-action disc has discrete displacement positions at well-defined pressure levels, resulting in discrete "on" and "off" states.

The channel 37 in this embodiment is preferably two inches long, and the striker 38 is preferably about one inch in cross-sectional diameter. A short channel has been found to give the highly desirable and unexpected result of a clear and persistent signal over a much wider range of vehicle speeds than is obtained with a longer channel. For example, when a seven-inch channel is used with a one-inch diameter striker, giving the striker a six-inch stroke length, the device will give a strong signal within a vehicle speed range of about 5 to 10 miles per hour. However, when a two-inch channel is used with a one-inch diameter striker, giving the striker a one-inch stroke length, the device will give a strong signal within a range of about 5 to 25 miles per hour. While a 5 to 10 mph range is acceptable, a 5 to 25 mph range is more advantageous. However, if it is desired to have the device operate in an intermediate speed range, the channel length can, of course, be varied to give a signal in the desired range of operation.

Another advantage of the use of a two-inch channel with a one-inch striker in this embodiment is that it allows the striker to be relatched on either side of the lock pin 47, assuring immediate relatching of the striker regardless of its position at rest.

0106678

- 12 -

Figs. 5 and 6 illustrate another embodiment of the invention utilizing a short channel. It will be understood that the length of the track or channel in any embodiment, including that shown in Figs. 1 and 2, can be modified to produce a signal in the desired speed range. In the embodiment of Figs. 5-6, a housing 51 defines a channel 52 concentric to the center of rotation of the wheel in which a flat cylinder 53 can roll concentric to a wheel rim on which the housing 51 is mounted. A circular latch housing 56 protruding from the channel housing 51 has as its outer wall a pressure-deformable snap-action disc 57 sealed on the latch housing 56 by adhesive or other means. An air passage 58 between the latch housing 56 and channel housing 51 allows the channel housing 51 to act as a reference pressure chamber for the snap-action disc 57. The channel housing 51 and latch housing 56 are sealed against the environment, and can be unitarily formed, if desired.

When pressure in the tire is above a chosen threshold level, the snap-action disc 57 is inwardly deformed. A lock pin 59 inside the latch housing extends from the center of the snap-action disc 57 into the channel 52 to block the path of a stepped surface 54 on the disc 53, thereby restraining the disc 53 from movement. The lock pin 59 is biased away from the channel by a lock pin return spring 61. When tire pressure drops below the threshold level, the snap-action disc 57 snaps outward to a domed configuration as shown in phantom in Fig. 5. The lock pin 59 will then be forced outward from the channel 52 by a return spring 61 bearing against the interior of the latch housing and a head on the pin 59, and will thus move out from the path of the stepped surface 54 on disc 53. The disc 53 will then be free to roll and impact against the ends of the channel 52, creating an audible signal on each collision with a channel end.

If pressure in the tire is raised above the threshold level, the snap-action disc 57 returns to its inwardly deformed configuration, overcoming the force of the return spring 61 and pressing the lock pin 59 back into the path of the disc 53.

As in the previously described embodiment, the channel is preferably about two inches long and the diameter of the disc 53 is half the length of the channel 52, allowing it to be latched at either end of the channel 52.

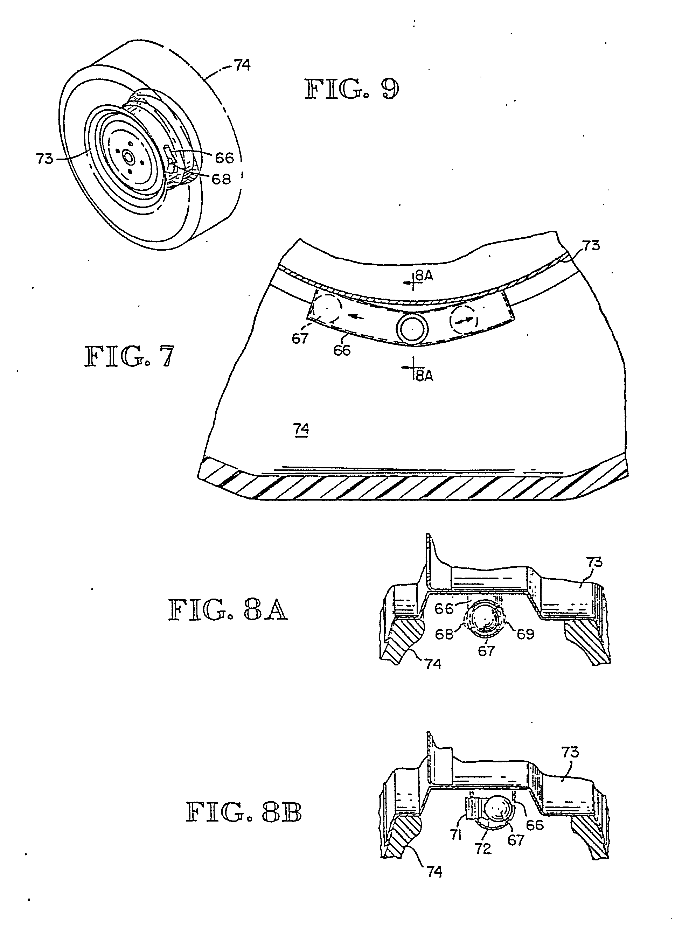

Referring now to Figs. 7 through 9, a fourth embodiment of the invention features a V-shaped track 66 containing a ball 67, and having a latching mechanism at its vertex. The latching mechanism may include a pair of snap-action discs 68 and 69 on opposite sides of the track 66, as seen in Fig. 8a. In such an embodiment, the track 66 is a sealed tube which acts as a reference pressure chamber. While the tire pressure is above a predetermined limit, the two snap-action discs 68 and 69 are inwardly deformed, clamping the ball 67 in a stationary position between

- 14 -

them. When tire pressure drops below the predetermined limit, the snap-action discs 68 and 69 snap outwardly, freeing the ball 67 to roll and impact against the walls of the track 66.

In the embodiment of Fig. 8b, an open-ended bellows 71 extends into the track 66 and has its end which is within the track 66 closed and suitably beveled to allow the ball 67 to slip between the bellows 71 and track sidewall. The track 66 is sealed off from the tire interior at a lower pressure than the fully inflated tire, and the bellows 71 is biased toward a contracted configuration by the use of a resilient material, or a spring within the bellows 71, or other means well-known in the art. Thus, when tire pressure is at or above a proper inflation level, the bellows 71 will expand and latch the ball 67 against the sidewall of the track 66. When tire pressure drops and no longer counteracts the biasing of the bellows 71, the bellows 71 will contract, freeing the ball 67.

It will be understood that these or any other of the disclosed embodiments of the invention may be adapted for use with either a diaphragm or bellows as the pressure-sensing element, with proper modification.

In the embodiments of Figs. 7-9, centripetal acceleration will force the ball 67 toward the vertex of the track 66 when the wheel is rotating at sufficient speed. If tire pressure has been raised above the threshold level, the ball 67 will then be relatched by the snap-action discs 68 and 69, or bellows 71.

- 15 -

In embodiments having the latching mechanism at one end of a track, that end can be raised from the wheel rim to allow centripetal acceleration to force the striker toward the latching mechanism, although the advantage of a track concentric with the wheel will then be lost.

In Fig. 9, the fourth embodiment is shown mounted on a wheel rim by welding for use in a tire 74, shown in phantom. In this and other embodiments, the device can alternatively be attached to the wheel rim with a metal rim band, with a suitable counterweight, such as a lead plate, mounted on the opposite side of the wheel rim for proper wheel balance. Use of banding to secure the device to the wheel has the advantages of ease of installation and causing no modification of the existing wheel structure.

Although the invention has been described with reference to specific embodiments and use in a specific environment, it will be understood that modifications to the above-described embodiments may be made, and the device adapted for use in environments other than pneumatic tires, without departing from the scope of the invention.

- 1 -

CLAIMS.

1. A device for audibly indicating a pressure drop in a rotating pressurized vessel comprising:

striker housing means located in said vessel and mounted to rotate therewith;

acoustical signal striker means mounted for free movement in said housing for impacting thereagainst; and

means operatively associated with said striker housing for restraining said striker means from movement within the housing when the pressure in the vessel is above a predetermined level.

2. The device of claim 1 wherein said restraining means comprises:

motion restricting means for restricting motion of the striker means;

said motion restricting means being movable between a first position restraining the motion of said striker means and a second position permitting free movement of the striker means; and

means responsive to the pressure in said vessel for moving the motion restricting means between said first and second positions.

3. The device of claim 2 wherein said means for moving the motion restricting means comprises a pressure deformable diaphragm connected for moving the motion restricting means to said first position; and

means for returning said motion restricting means to said second position when the pressure in the vessel is above said predetermined level.

- 2 -

0106678

4. The device of claim 2 or 3 wherein:

said vessel comprises a pneumatic tire and wheel assembly, said striker housing being fixedly mounted to the wheel thereof;

said striker housing comprising an elongated arcuate tube substantially concentric to the axis of said wheel;

-said motion restricting means comprising a latching spring means for holding said striker means at one end of said tube when the pressure in said tire is above said predetermined level and permitting free movement in said tube when the pressure is below said predetermined level;

said latching spring means being so formed as to permit the striker means to return to the restrained position regardless of its position in the tube when said latching spring is in the first position.

5. The device of claim 2 or 3 whereih:

said striker housing is elongated and said motion restricting means extends from the midpoint of a sidewall thereof in the path of movement of said striker means; and

the longitudinal dimension of said striker means is approximately one-half the length of said housing;

whereby said striker means is restrained when said motion restricting means is in the .first position.

6. The device of claim 2 or 3 wherein:

said vessel comprises a pneumatic tire and wheel assembly, said striker housing being fixedly mounted to the wheel thereof;

said striker housing comprising a substantially v-shaped tube; and

said motion restricting means extends from the midpoint of a side wall of said tube in the path of movement of the striker means;

said motion restricting means being constructed and arranged to hold said striker means at the apex of said tube when in the first position thereof.

7. A device for audibly signalling the underinflation of a rotating pneumatic tire mounted on a flanged wheel assembly, comprising:

a movable body;

means for confining said body near a surface of the wheel and spaced from the center of rotation of the wheel, said confining means defining a space in which said body is free to move;

pressure responsive means for detecting underinflation of the tire; and

means for preventing movement of said body within said confining means in response to said pressure responsive means, whereby said body is retained in a fixed position while tire is not underinflated, and is allowed free movement while the tire is underinflated to impact against the confining means during tire rotation and generate audible signals thereby.

8. A device according to claim 7 wherein said confining means is mounted to the wheel in the interior of the tire.

9. A device according to claim 7 wherein said pressure responsive means comprises a snap-action disc having discrete linear displacement positions at predetermined inflation pressures.

10. A device according to claim 1 wherein said confining means defines a path for movement of said body concentric to the center of rotation of the wheel.

11. A device according to claim 7 wherein said body comprises a cylindrical body.

12. A device according to claim 7 wherein said body comprises a spherical body.

13. A device according to claim 7 or 10 wherein said confining means has a longitudinal dimension approximately twice that of said body.

0106678

1/2

**FIG. 2**

**FIG. 1**

FIG. 2A

FIG. 3

FIG. 5

FIG. 4

FIG. 6

0106678

FIG. 9

FIG. 7

FIG. 8A

FIG. 8B